# EUROPÄISCHE PATENTANMELDUNG

(11) **EP 2 810 729 A1**
(43) Veröffentlichungstag der Anmeldung: **10.12.2014**
(21) Anmeldenummer: 13170572.5
(22) Anmeldetag: 05.06.2013
(51) Int. Cl.: B23F 21/22, B23C 5/22

(54) **Werkzeug mit Schneidplatten, Adapter mit Schneidplatten und Verwendung eines solchen Werkzeugs**

(71) Anmelder: Boehlerit GmbH & Co. KG., 8605 Kapfenberg (AT); Klingelnberg AG, 8050 Zürich (CH)
(72) Erfinder: Bärnthaler, Walter, 8641 St. Marein im Mürztal (AT); Brieden, Christian, 42499 Hückeswagen (DE)
(74) Vertreter: OK pat AG

(57) **Zusammenfassung**

Adapter (100) zur spanabhebenden Verzahnungsbearbeitung eines Werkstücks, wobei der Adapter (100) einen Adapterkörper (104) umfasst mit einem Aufnahmebereich zum Einsetzen einer Schneidplatte (10). Er umfasst weiterhin eine Auflagefläche im Aufnahmebereich, auf der die Schneidplatte (10) aufliegt. Es sind zwei seitliche Anschlagflächen (102.1) im Aufnahmebereich vorgesehen, an denen die Schneidplatte (10) anliegt. Der Adapter (100) umfasst einen Exzentermechanismus (120), der so ausgebildet ist, dass durch das Ausführen einer Drehbewegung die Schneidplatte (10) zwischen der Auflagefläche und dem Exzentermechanismus (120) festgeklemmt werden kann.

## Beschreibung

Die Erfindung betrifft (Schneid-)Werkzeuge, insbesondere Kegelradschneidwerkzeuge (Kegelradfräswerkzeuge), zum spanenden Bearbeiten von Kegelradverzahlungen. Die Erfindung betrifft auch Adapter zum Einsatz in Werkzeugen und die Verwendung solcher Werkzeuge beim Weich- oder Hartverzahnen.

### Stand der Technik

Es gibt verschiedene Werkzeuge zum Bearbeiten von Kegelrädern. Gegenwärtig besonders bevorzugt ist eine Bearbeitung von Kegelrädern mit sogenannten Stirnmesserköpfen, die mit einer Anzahl an Stabmessern ausgestattet sind. Diese Stabmesser ragen in axialer Richtung des Stirnmesserkopfes und sind so angeordnet und ausgerichtet, dass die Flanken der Zahnlücken eines Kegelrades mit den Stabmessern bearbeitet werden können.

Alternativ kommen auch Stirnmesserköpfe mit sogenannten Formmessern zum Einsatz. Diese Formmesser haben eine andere Form als die Stabmesser. Das bekannte Zyklo-Palloid®-Verfahren nutzt zum Beispiel Messerköpfe zum Herstellen von Spiralkegelrädern, wobei die Messerköpfe mit Formmessern bestückt sind.

Es gibt auch Werkzeugsysteme, bei denen die Messer mit sogenannten Schneidplatten oder auch Wendeschneidplatten bestückt sind. Ein entsprechendes Beispiel ist aus dem deutschen Gebrauchsmuster DE 20 2007 007 063 U1 des vorliegenden Anmelders bekannt. Es kommt dort ein Werkzeug zum Einsatz, das mehrere Formmesser umfasst. Jedes der Formmesser besteht aus einem Plattenhalter und aus mindestens einer Frässchneidplatte, die an dem Plattenhalter befestigt ist. Aus dem genannten Gebrauchsmuster ist der Einsatz eines Exzenterelements bekannt, das dazu dient die Position einer der Frässchneidplatte in Bezug zum Plattenhalter zu verändern. Genauer gesagt geht es in dem genannten Gebrauchsmuster unter anderem um ein Exzenterelement, das als Einstellelement zum Feinjustieren der Höhenlage der Frässchneidplatte dient.

Um solche Frässchneidplatten befestigen zu können, haben die Frässchneidplatten entweder eine komplexe Gestalt, oder sie sind mit Befestigungsmitteln - zum Beispiel in Form einer Befestigungsbohrung - versehen. Dabei ist von Nachteil, dass einerseits die Frässchneidplatten stets genau zu den Befestigungsmitteln der Plattenhalter passen müssen. Andererseits ist das Befestigen der Frässchneidplatten am Plattenhalter mit mehreren Handhabungsschritten verbunden. Ausserdem kann, je nach Befestigungsmittel, die Steifigkeit der Frässchneidplatte beeinträchtigt sein.

Bei dynamischer Belastung können sich Befestigungsmittel, bei denen eine Schraube durch eine Befestigungsbohrung der Frässchneidplatte hindurch in einen Plattenhalter geschraubt wird, lösen.

Von daher liegt der Erfindung die Aufgabe zugrunde, ein Verzahnungswerkzeug für das Schneiden, insbesondere für das Fräsen, von Kegelrädern bereit zu stellen und dieses kostengünstig zu gestalten.

Eine weitere Aufgabe der Erfindung liegt darin, den Zeitaufwand, der mit dem Ausbauen, Nachschleifen und Wiedereinbauen der Formmesser verbunden ist, zu reduzieren.

Die Aufgaben werden erfindungsgemäß durch eine Vorrichtung gemäß Patentanspruch 1, durch eine Vorrichtung gemäß Patentanspruch 12 und durch eine Verwendung gemäß Anspruch 17 gelöst.

Gemäß Erfindung wird diese Aufgabe dadurch gelöst, dass ein Verzahnungswerkzeug zur spanabhebenden Bearbeitung eines Werkstücks bereit gestellt wird, das umfasst:
- einen Aufnahmebereich zum Einsetzen einer (Wende-)Schneidplatte,
- eine Auflagefläche im Aufnahmebereich, auf der die Schneidplatte (möglichst ganzflächig) aufliegt, nachdem sie in den Aufnahmebereich eingesetzt wurde,
- mindestens zwei seitliche Anschlagflächen im Aufnahmebereich, an denen die Schneidplatte anliegt, nachdem sie in den Aufnahmebereich eingesetzt wurde,
- einen Exzentermechanismus.

Der Exzentermechanismus ist so ausgebildet, dass durch das Ausführen einer Drehbewegung die Schneidplatte zwischen der Auflagefläche und dem Exzentermechanismus festgeklemmt werden kann.

Der Exzentermechanismus ist vorzugsweise so ausgebildet und oberhalb der Auflagefläche angeordnet, dass durch das Ausführen einer Drehbewegung ein lichter Abstand zwischen der Auflagefläche und einem Kontaktbereich des Exzentermechanismus reduziert wird, um die Schneidplatte zwischen der Auflagefläche und der Kontaktseite des Exzentermechanismus festklemmen zu können.

Gemäß Erfindung wird diese Aufgabe dadurch gelöst, dass ein Adapter zur spanabhebenden Verzahnungsbearbeitung eines Werkstücks bereit gestellt wird, der einen Adapterkörper umfasst mit
- einem Aufnahmebereich zum Einsetzen einer (Wende-)Schneidplatte,
- einer Auflagefläche im Aufnahmebereich, auf der die Schneidplatte aufliegt, nachdem sie in den Aufnahmebereich eingesetzt wurde, und
- mit mindestens zwei seitlichen Anschlagflächen im Aufnahmebereich, an denen die Schneidplatte anliegt, nachdem sie in den Aufnahmebereich eingesetzt wurde.
Ausserdem umfasst der Adapter einen Exzentermechanismus, um die Schneidplatte zwischen der Auflagefläche und der Kontaktseite des Exzentermechanismus festklemmen zu können.

Der Exzentermechanismus ist so am Adapter ausgebildet, dass durch das Ausführen einer Drehbewegung die Schneidplatte zwischen der Auflagefläche und dem Exzentermechanismus festgeklemmt werden kann.

Der Exzentermechanismus ist vorzugsweise so am Adapter ausgebildet und oberhalb der Auflagefläche angeordnet, dass durch das Ausführen einer Drehbewegung ein lichter Abstand zwischen der Auflagefläche und einem Kontaktbereich des Exzentermechanismus reduziert wird, um die Schneidplatte zwischen der Auflagefläche und der Kontaktseite des Exzentermechanismus festklemmen zu können.

Vorzugsweise kommt ein Exzenterkörper als Teil des Exzentermechanismus zum Einsatz, der als dreidimensionaler schneckenförmiger oder spiralförmiger Exzenterkörper, oder als ein Segment eines solchen Körpers ausgebildet ist.

Vorzugsweise ist der Aufnahmebereich bei allen Ausführungsformen als Bucht oder Tasche ausgebildet, wobei nach dem Einsetzen einer Schneidplatte in den Aufnahmebereich die Schneidplatte möglichst ganzflächig auf der Auflagefläche aufliegt. Als ganzflächiges Aufliegen wird hier eine Konstellation bezeichnet, bei der mehr als 60% (hier als Überlappung bezeichnet) der Grundfläche der Schneidplatte flächig auf der Auflagefläche liegt und von dieser gestützt wird.

Vorzugsweise liegt bei allen Ausführungsformen mehr als 80% der Grundfläche der Schneidplatte flächig auf der Auflagefläche und wird von dieser gestützt. D.h. die Überlappung beträgt > 80%.

Vorzugsweise ist der Aufnahmebereich bei allen Ausführungsformen als Bucht oder Tasche ausgebildet, die eine Grundform hat, die der Grundform der Schneidplatte entspricht. Eine solche Bucht oder Tasche zeichnet sich dadurch aus, dass die mindestens zwei seitliche Anschlagflächen im Aufnahmebereich aufweist, die an die Auflagefläche angrenzen. Die beiden seitlichen Anschlagflächen schließen vorzugsweise bei allen Ausführungsformen einen Winkel ein, der kleiner 90 Grad ist.

Vorzugsweise hat die Schneidplatte bei allen Ausführungsformen die Grundform einer Raute- oder eines Parallelogramms und der Aufnahmebereich hat vorzugsweise mindestens teilweise auch die Grundform einer Raute- oder eines Parallelogramms.

Vorzugsweise ist die Schneidplatte bei allen Ausführungsformen als eine zweischneidige Schneidplatte (Wendeschneidplatte genannt) ausgebildet, die durch ein Lösen des Exzentermechanismus aus dem Aufnahmebereich entnommen, umgedreht und durch das Ausführen der Drehbewegung in dem selben Aufnahmebereich oder in dem Aufnahmebereich eines anderen Adapters oder Werkzeugs erneut festgeklemmt werden kann.

Vorzugsweise ist der Exzentermechanismus bei allen Ausführungsformen selbsthemmend ausgelegt.

Vorzugsweise ist der Exzentermechanismus bei allen Ausführungsformen selbsthemmend ausgelegt, damit er beim Ausführen der Drehbewegung die Schneidplatte einklemmt und zugleich in den Aufnahmebereich, respektive in die Bucht oder Tasche des Aufnahmebereichs hinein schiebt und dort blockiert.

Bei einem Teil der Ausführungsformen sind vorzugsweise die folgenden Elemente/Komponenten an einem Grundkörper des Werkzeugs ausgebildet:
- der Aufnahmebereich mit der Auflagefläche und den seitlichen Anschlagflächen,
Der Exzentermechanismus ist in diesem Fall am Grundkörper des Werkzeugs befestigt.

Bei einem anderen Teil der Ausführungsformen sind vorzugsweise die folgenden Elemente/Komponenten an einer Klemmhalterung (hier als Adapter bezeichnet) ausgebildet:
- der Aufnahmebereich mit der Auflagefläche und den seitlichen Anschlagflächen,
- der Exzentermechanismus,
   wobei mindestens einer dieser Adapter an einem Grundkörper des Werkzeugs befestigt werden kann. D.h. in diesem Fall ist der Grundkörper des Werkzeugs mit einem oder mit mehreren Adaptern bestückbar. Der/die Adapter sind dann mit je einer (Wende-)Schneidplatte bestückbar.

Es ist ein Vorteil des Einsatzes der erfindungsgemäßen Werkzeuge, dass die Kosten pro gefertigten Bauteil geringer sind als bei der Verwendung anderer Werkzeuge. Außerdem bieten sie trotzdem eine hohe Genauigkeit und Standzeit.

Es ist ein Vorteil der erfindungsgemäßen Werkzeuge, dass die Schneidplatten mehrfach verwendet werden können (z.B. wenn die Schneidplatte als zweischneidige Wendeschneidplatte ausgebildet ist), ohne dass ein Nachschleifen notwendig wäre. Zu diesem Zweck kann eine zweischneidige Schneidplatte gewendet werden, um dann erneut in dem Aufnahmebereich festgeklemmt zu werden.

Es ist ein Vorteil der erfindungsgemäßen Werkzeuge, dass sie in einem kontinuierlichen Wälzfräsverfahren - z.B. zum fräsenden Bearbeiten von Kegelradverzahnungen (analog zum Zyklo-Palloid®-Verfahren ) - aber auch im Einzelteilverfahren eingesetzt werden können.

Weitere vorteilhafte Ausführungsformen sind den abhängigen Patentansprüchen zu entnehmen.

### ZEICHNUNGEN

Ausführungsbeispiele der Erfindung werden im Folgenden unter Bezugnahme auf die Zeichnungen näher beschrieben.
- **FIG. 1A**: zeigt eine Perspektivansicht einer ersten Schneidplatte gemäß Erfindung;
- **FIG. 1B**: zeigt eine schematisierte Seitenansicht der ersten Schneidplatte nach Fig. 1A;
- **FIG. 2**: zeigt eine Perspektivansicht einer ersten Ausführungsform eines Adapters gemäß Erfindung, der mit einer Schneidplatte nach Fig. 1A bestückt ist;
- **FIG. 3**: zeigt eine Ansicht des Adapters nach Fig. 2;
- **FIG. 4**: zeigt eine Detailansicht des Adapters nach Fig. 2.
- **FIG. 5**: zeigt eine Perspektivansicht einer zweiten Ausführungsform eines Adapters gemäß Erfindung, der mit einer Schneidplatte der Erfindung bestückt ist;
- **FIG. 6**: zeigt eine Draufsicht des Adapters und der Schneidplatte der Fig. 5;
- **FIG. 7**: zeigt eine Schnittansicht des Adapters und der Schneidplatte der Fig. 5 entlang der Schnittlinie A-A;
- **FIG. 8A**: zeigt eine Ausschnittsvergrösserung der Schnittansicht der Fig. 7;
- **FIG. 8B**: zeigt eine schematisierte Darstellung Ausschnittsvergrösserung der Fig. 8A;
- **FIG. 9A**: zeigt eine stark schematisierte Skizze des Aufnahmebereichs einer Ausführungsform der Erfindung samt einer Schneidplatte der Erfindung;
- **FIG. 9B**: zeigt eine Prinzipskizze, die ausgehend von Fig. 9A die Überlappung und den seitlichen Linien- oder Flächenkontakt darstellt;
- **FIG. 10**: zeigt eine Perspektivansicht einer Ausführungsform eines Werkzeugs, das mit zehn paarweise angeordneten Adaptern der Erfindung bestückt ist, wobei jeder dieser Adapter eine Wendeschneidplatte trägt.

### Detaillierte Beschreibung

Im Zusammenhang mit der vorliegenden Beschreibung werden Begriffe verwendet, die auch in einschlägigen Publikationen und Patenten Verwendung finden. Es sei jedoch angemerkt, dass die Verwendung dieser Begriffe lediglich dem besseren Verständnis dienen soll. Der erfinderische Gedanke und der Schutzumfang der Patentansprüche soll durch die spezifische Wahl der Begriffe nicht in der Auslegung eingeschränkt werden. Die Erfindung lässt sich ohne weiteres auf andere Begriffssysteme und/oder Fachgebiete übertragen. In anderen Fachgebieten sind die Begriffe sinngemäß anzuwenden.

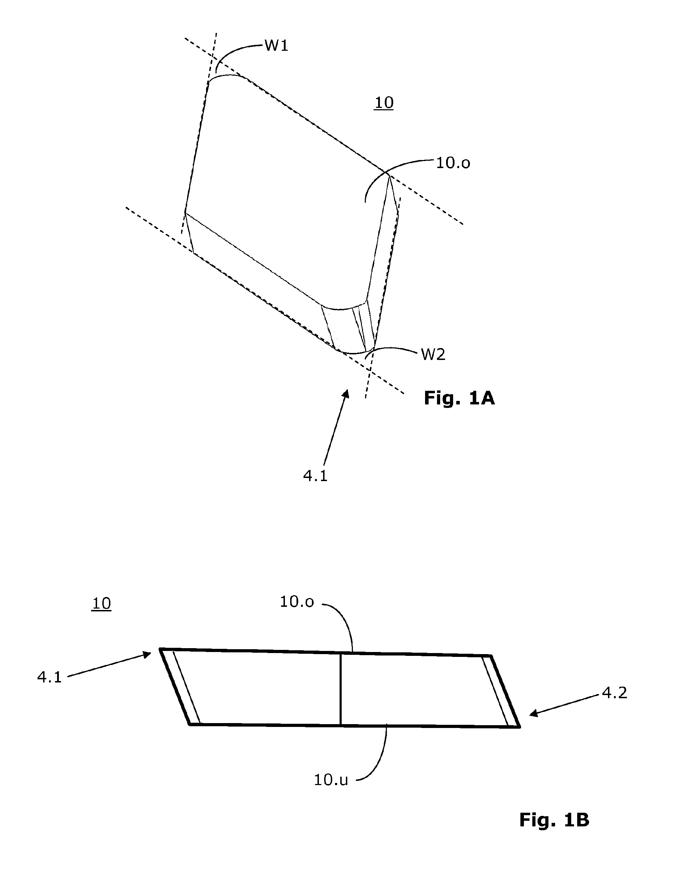

Eine erste Ausführungsform einer Schneidplatte 10 der Erfindung ist in Fig. 1A gezeigt. Fig. 1A zeigt eine zweischneidige Wendeschneidplatte 10, die eine Rauten- oder Parallelogrammform hat. Die beiden Winkel W1 und W2 sind bei einer solchen zweischneidigen Wendeschneidplatte 10 gleich. Es ist zu beachten, dass die beiden Winkel W1 und W2 in unterschiedlichen Ebenen liegen.

In Fig. 1B ist eine schematisierte Seitenansicht einer solchen Schneidplatte 10 gezeigt. Fig. 1 B kann man entnehmen, dass die Schneidplatte 10 vorzugsweise bei allen Ausführungsformen zwei Grundflächen 10.o und 10.u aufweist, die parallel zueinander liegen. Ausserdem weist eine solche zweischneidige Schneidplatte 10 einen ersten Kopfbereich 4.1 und einen zweiten Kopfbereich 4.2 auf.

Gemäss Erfindung sind die Schneidplatten 10 der Erfindung vorzugsweise bei allen Ausführungsformen als einstückige Schneidplatten 10 ausgebildet.

Gemäss Erfindung sind die Schneidplatten 10 der Erfindung vorzugsweise bei allen Ausführungsformen als einstückige Wendeschneidplatten 10 ausgebildet.

Gemäss Erfindung sind die Schneidplatten 10 der Erfindung vorzugsweise bei allen Ausführungsformen als loch- und ausnehmungsfreie Schneidplatten 10 ausgebildet. Löcher und Ausnehmungen sind nämlich nicht erforderlich, da die Befestigung der Schneidplatten 10 durch das Einklemmen an einem Werkzeug 50, respektive an einem Adapter 100 erfolgt.

Die Schneidplatten 10 sind vorzugsweise bei allen Ausführungsformen aus einem der folgenden Materialien gefertigt: Hartmetall, beschichtetes Hartmetall, Schneidkeramik, CBN und andere Schneidwerkstoffe sowie Kombinationen solcher Werkstoffe.

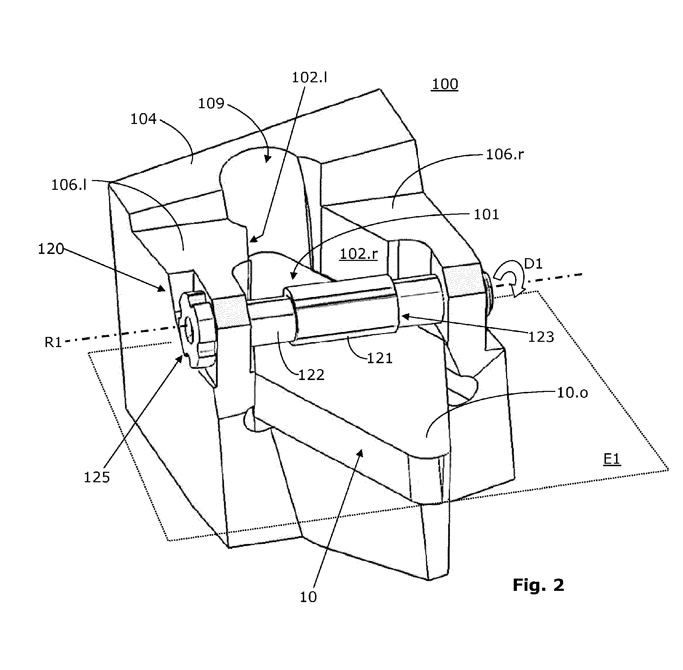

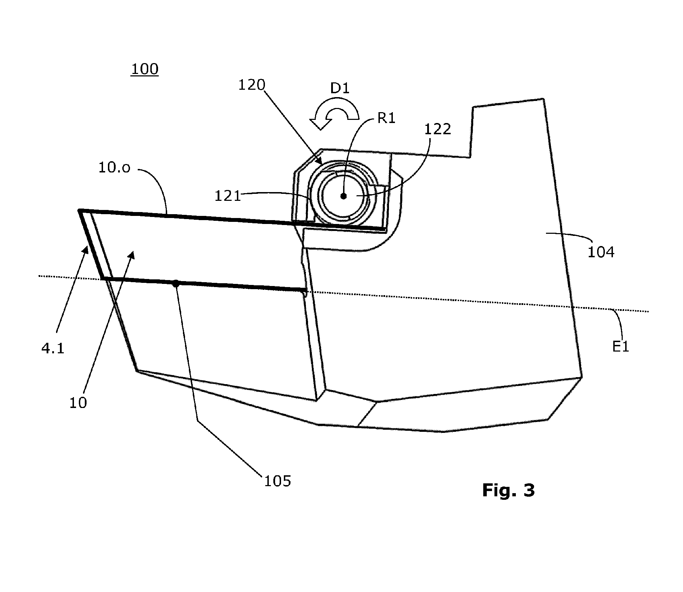

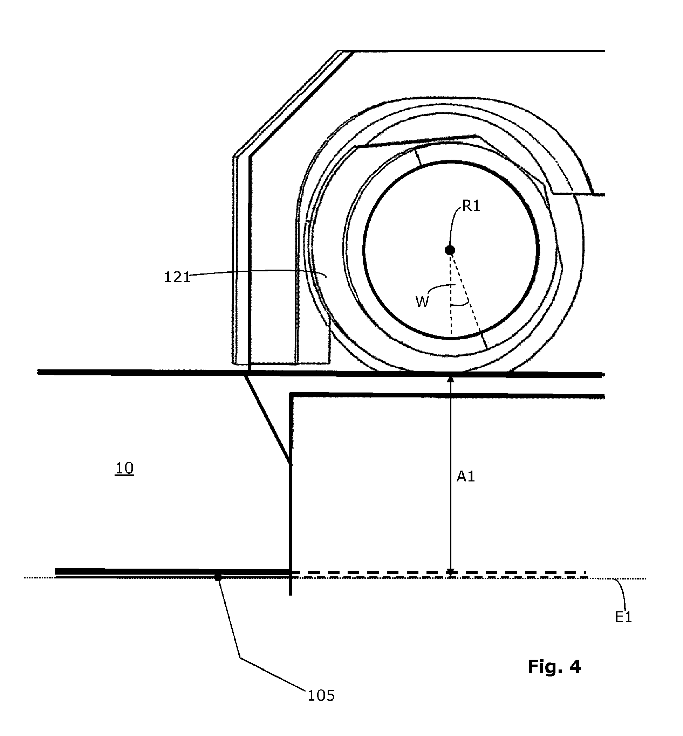

Fig. 2 zeigt eine Perspektivansicht einer ersten Ausführungsform eines Adapters 100, der mit einer Schneidplatte 10 nach Fig. 1A, 1B bestückt ist. Fig. 3 zeigt eine Schnittansicht des Adapters nach Fig. 2 und Fig. 4 zeigt eine vergrößerte Detailansicht des Adapters nach Fig. 2.

Der gezeigte Adapter 100 umfasst einen Aufnahmebereich 101, der speziell zum Einsetzen einer Schneidplatte 10 ausgelegt ist. Zu dem Zweck des Einsetzens einer Schneidplatte 10 umfasst der Aufnahmebereich 101 eine Auflagefläche 105, auf der die Schneidplatte 10 aufliegt, nachdem sie in den Aufnahmebereich 101 eingesetzt wurde. In Fig. 2 ist die Auflagefläche 105 nicht sichtbar, da sie von der eingesetzten Schneidplatte 10 verdeckt wird. In den Figuren 3 und 4 kann man die Auflagefläche 105 erkennen.

Der Aufnahmebereich 101 weist mindestens zwei seitliche Anschlagflächen 102.l, 102.r auf, an denen die Schneidplatte 10 mindestens teilweise anliegt, nachdem sie in den Aufnahmebereich 101 eingesetzt wurde. In Fig. 2 ist ein Teil der rechten Anschlagfläche 102.r sichtbar. Die linke Anschlagfläche 102.l wird durch einen linken Schenkel 106.l verdeckt.

Ein rechter Schenkel 106.r und ein linker Schenkel 106.l sind hier an einem Grundkörper 104 des Adapters 100 ausgebildet.

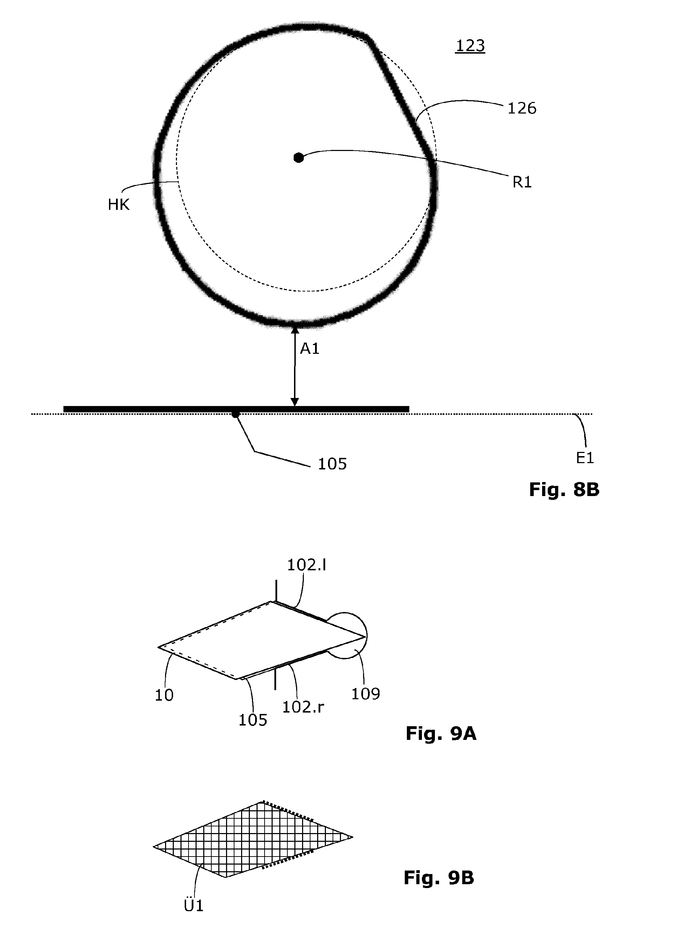

Der gezeigte Adapter 100 umfasst einen Exzentermechanismus 120, der so ausgebildet und oberhalb der Auflagefläche 105 angeordnet ist, dass durch das Ausführen einer Drehbewegung D1 um eine Drehachse R1 ein lichter Abstand A1 (siehe Fig. 4 oder Fig. 8B) zwischen der Auflagefläche 105 und einem äusseren Kontaktbereich 121 des Exzentermechanismus 120 reduziert wird.

Die Drehachse R1 liegt vorzugsweise bei allen Ausführungsformen parallel zu der Ebene E1, die durch die Auflagefläche 105 aufgespannt wird. Auch die beiden Grundflächen 10.o und 10.u der Schneidplatte 10 liegen parallel zu der Ebene E1, die durch die Auflagefläche 105 aufgespannt wird, nachdem die Schneidplatte 10 in den Aufnahmebereich 101 eingesetzt wurde. Die Ebene E1 ist in Fig. 2 angedeutet. Sie liegt auf dem Niveau der Auflagefläche 105. In den Fig. 3, 4 und Fig. 7 ist jeweils die Schnittlinie der Ebene E1 mit der Zeichnungsebene sichtbar gemacht.

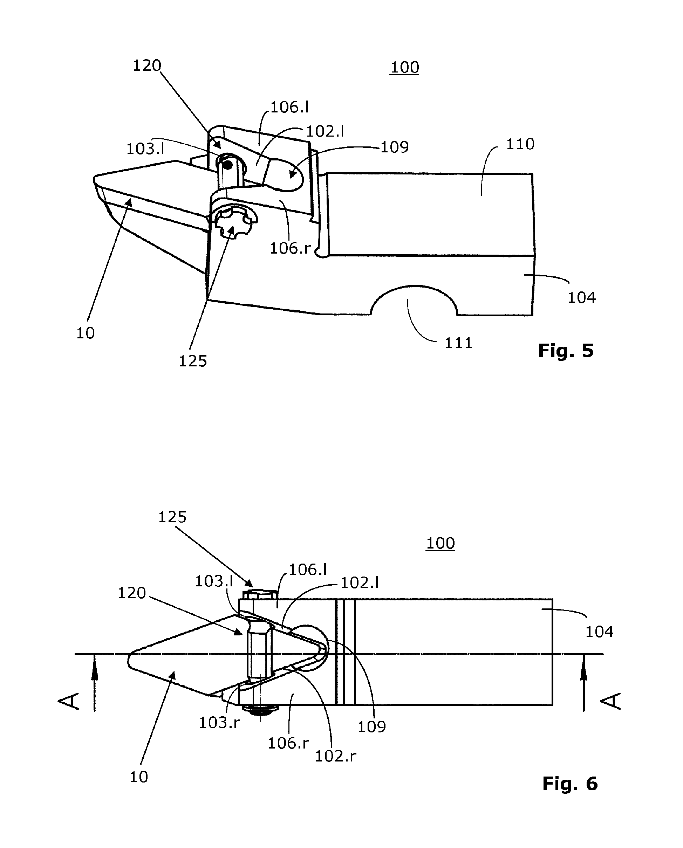

In den Figuren 5 bis 8B sind Details einer weiteren beispielhaften Ausführungsform der Erfindung gezeigt. Es ist hier ein Adapter 100 gezeigt, der zur spanabhebenden Bearbeitung eines Werkstücks ausgelegt ist. Der Adapter 100 umfasst einen Adapterkörper 104 mit einem Aufnahmebereich 101 zum Einsetzen einer (Wende-)Schneidplatte 10. Am Adapterkörper 104 ist im Aufnahmebereich 101 eine Auflagefläche 105 vorgesehen, auf der die Schneidplatte 10 aufliegt, nachdem sie in den Aufnahmebereich 101 eingesetzt wurde. Es befinden sich mindestens zwei seitliche Anschlagflächen 102.l, 102.r im Aufnahmebereich 101, an denen die Schneidplatte 10 (mindestens teilweise) anliegt. Weiterhin ist an dem Adapter 100 ein Exzentermechanismus 120 angeordnet, der so ausgebildet ist und oberhalb der Auflagefläche 105 sitzt, dass durch das Ausführen einer Drehbewegung D1 der lichte Abstand A1 zwischen der Auflagefläche 105 und dem Kontaktbereich 121 des Exzentermechanismus 120 reduziert wird. So kann die Schneidplatte 10 zwischen der Auflagefläche 105 und der Kontaktseite 121 des Exzentermechanismus 120 festgeklemmt werden.

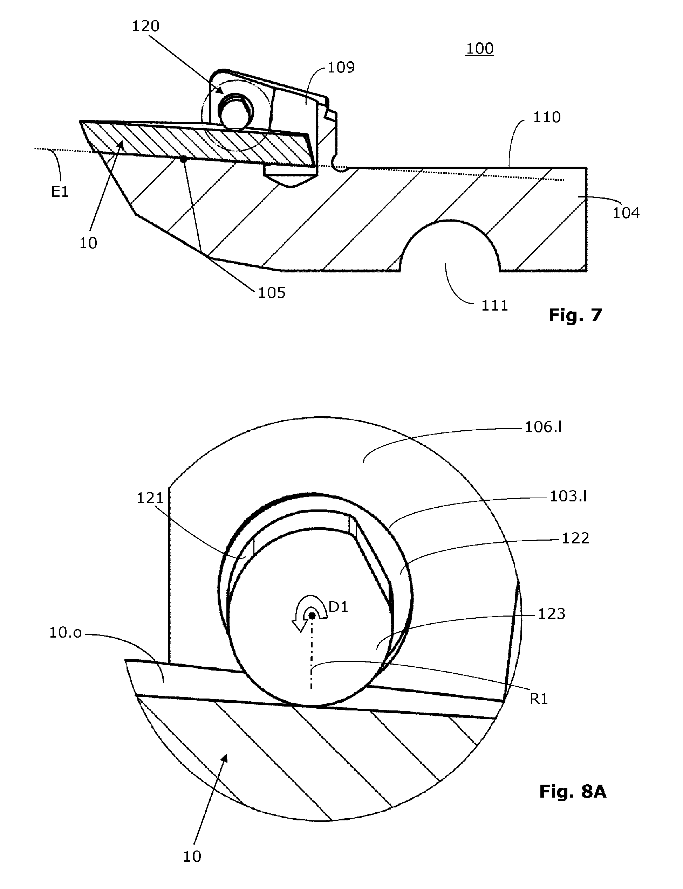

Der gezeigte Adapter 100 gibt für die Schneidplatte 10 eine leicht schräg angestellte Position vor. In Fig. 7 kann man erkennen, dass die Ebene E1 leicht schrägt steht gegenüber der Oberfläche 110 des Adapterkörpers 104.

Die Orientierung und Position der Schneidplatte 10 am Adapter 100 oder am Werkzeug 50 kann bei erfindungsgemässen Ausführungsformen auch anderes sein als in den Figuren 1 - 10 gezeigt.

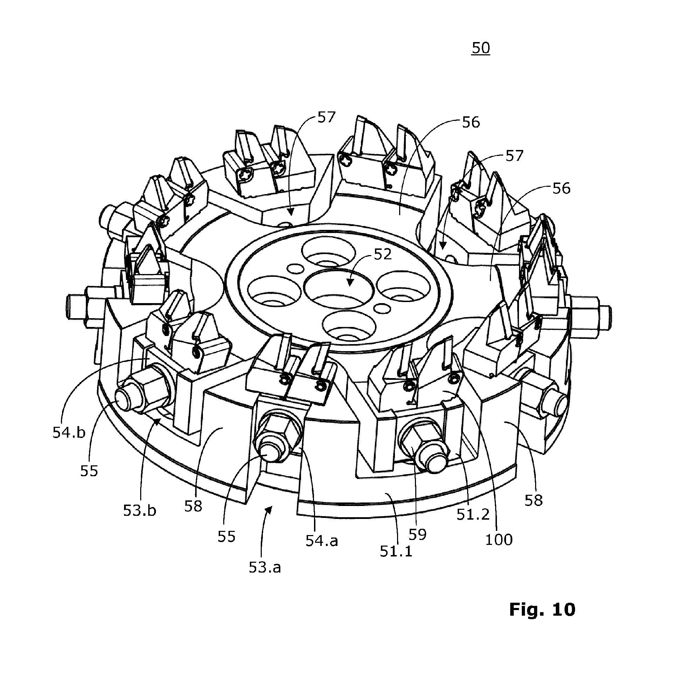

Vorzugsweise umfasst der Adapter 100 bei allen Ausführungsformen Mittel, Ausnehmungen 111 oder Löcher, die es erlauben den Adapter 100 an einem Werkzeug 50 (z.B. an einer der Komponenten 51.1, 51.2 eines Grundkörpers) zu befestigen. Bei dem Beispiel der Figuren 5 bis 8B ist eine Ausnehmung 111 am Adapterkörper 104 vorgesehen, die hier die Form eines Halbzylinders hat (siehe Fig. 5 und 7). Wenn man zwei Adapter 100 nebeneinander (paarweise) an einem Werkzeug 50 anordnet, so bilden die Ausnehmungen 111 an den Adapterkörpern 104 eine zylindrische Durchgangsöffnung durch die hindurch sich z.B. ein Gewindestift 55 (siehe Fig. 10) oder eine Schraube erstrecken kann.

Unterhalb des Exzentermechanismus 120 gibt es einen lichten Abstand A1, der als Abstand (senkrecht zur Ebene E1 betrachtet) zwischen der Auflagefläche 105 und einem äusseren Kontaktbereich 121 des Exzentermechanismus 120 definiert ist (siehe Fig. 4 oder Fig. 8B). Als äusserer Kontaktbereich 121 des Exzentermechanismus 120 wird hier die Mantelfläche eines Exzenterkörpers 123 betrachtet.

Vorzugsweise ist der lichte Abstand A1 bei allen Ausführungsformen eine Funktion der Drehung D1, oder, um genauer zu sein, eine Funktion der Winkelstellung des Kontaktbereichs 121. Der Winkel W ist in Fig. 4 eingezeichnet. Der Exzentermechanismus 120 wurde aus der Nullstellung (in dieser Stellung ist der lichte Abstand A1 maximal) um einige wenige Grad um die Drehachse R1 gegen den Uhrzeigersinn gedreht. Die Nullstellung liegt in Fig. 4 ca. bei 5 Uhr, während die Klemmstellung (die Stellung, welche der Exzentermechanismus 120 in Fig. 4 einnimmt) bei ca. 6 Uhr liegt. In der Klemmstellung ist der lichte Abstand A1 kleiner als in der Nullstellung.

Vorzugsweise sitzt bei allen Ausführungsformen ein solcher Exzenterkörpers 123 auf einer Welle 122, oder er stellt einen integralen Bestandteil der Welle 122 dar.

Es kann aber auch bei allen Ausführungsformen ein sogenannter Spiralexzenter als Teil des Exzentermechanismus 120 zum Einsatz kommen, wie in den Figuren 6 bis 8B anhand einer entsprechenden Ausführungsform gezeigt.

Im Querschnitt (um genauer zu sein im Stirnschnitt) betrachtet (siehe Fig. 3), hat der Exzenterkörper 123 eine leicht ovale Schnittfläche. Im Stirnschnitt betrachtet (siehe Fig. 8B), hat ein Exzenterkörper 123, der als Spiralexzenter ausgebildet ist, eine leicht exzentrische Schnittfläche, die z.B. von einer Archimedischen Spirale abgeleiten werden kann.

Vorzugsweise ist der Exzenterkörper 123 bei allen Ausführungsformen als dreidimensionaler schneckenförmiger oder spiralförmiger Exzenterkörper 123 ausgebildet, wie man in den Figuren 3 und 4 sowie in den Figuren 7, 8A und 8B erkennen kann. Dieser Exzenterkörper 123 zeichnet sich dadurch aus, dass er durch einen Kurvenverlauf definiert werden kann, der um die Drehachse R1 verläuft und die sich je nach Laufrichtung von dieser entfernt oder sich dieser annähert.

In diesem Fall ergibt sich die Exzentrizität des Exzentermechanismus 120 durch die Exzentrizität des Exzenterkörpers 123.

Es sind aber auch Ausführungsformen möglich, bei denen sich die Exzentrizität des Exzentermechanismus 120 durch eine exzentrische Lagerung eines an und für sich rotationssymmetrischen Körpers 124 ergibt. Eine solche Lösung mit einem exzentrisch gelagerten Körper 124 wird als gleichwirkend angesehen. Im Folgenden ist daher generell die Rede von der Exzentrizität des Exzentermechanismus 120.

Der Hub, der durch das Drehen der Exzentermechanismus 120 um die Drehachse R1 erzielt werden kann, ist durch die Exzentrizität des Exzentermechanismus 120 gegeben. Falls ein schnecken- oder spiralförmiger Körper als Exzenterkörper 123 dient, wird der Hub durch die Steigung der Windungen der Schnecke oder Spirale definiert. Um so steiler die Steigung der Windungen ist, um so grösser ist der Hub, den man pro Grad Winkelverdrehung erreicht. Falls eine exzentrische Lagerung die Exzentrizität definiert, so wird der Hub durch dass Mass der Exzentrizität der Lagerung definiert.

Durch das Verändern des lichten Abstands A1 kann die Schneidplatte 10 zwischen der Auflagefläche 105 und der Kontaktseite 121 des Exzentermechanismus 120 festgeklemmt werden.

Vorzugsweise ist der Exzentermechanismus 120 und/oder der Exzenterkörper 123 bei allen Ausführungsformen so ausgebildet und drehbar gelagert, dass zum Festklemmen der Schneidplatte 10 eine Drehung entgegen des Uhrzeigersinns vorgegeben werden muss. Zum Lösen wird dann hier eine Drehung im Uhrzeigersinn aufgebracht.

Vorzugsweise ist der Exzentermechanismus 120 bei allen Ausführungsformen so ausgebildet, dass man von aussen auf die Werkzeugschnittstelle 125 zugreifen kann, um das Lösen und Einspannen (Festklemmen) mit einem Werkzeug vornehmen zu können.

Vorzugsweise ist der Exzentermechanismus 120 bei allen Ausführungsformen so ausgebildet, dass die Drehrichtung zum Lösen und Einspannen (Festklemmen) bei Schneidplatten 10 für linke Adapter anders herum ist wie bei Schneidplatten 10 für rechte Adapter. Diese linken bzw. rechten Adapter werden für das Herstellen linksspiraliger bzw. rechtsspiraliger Verzahnungen eingesetzt.

Vorzugsweise ist der Exzentermechanismus 120 bei allen Ausführungsformen so ausgebildet, dass beim Einspannen (Festklemmen) die jeweilige Schneidplatte 10 in Richtung der Erweiterung 109, respektive in den Aufnahmebereich 101 hinein gedrückt wird.

Vorzugsweise ist der Exzentermechanismus 120 bei allen Ausführungsformen so ausgebildet, dass ein Werkzeug angesetzt werden kann, um das Drehen D1 um die Drehachse R1 manuell oder maschinell zu ermöglichen. In den Figuren 2 und 5 kann man eine spezielle Werkzeugschnittstelle 125 erkennen, die für ein Aufsteckwerkzeug geeignet ist, das im vorderen Bereich hohl ist und vier innenliegende Stege oder Rippen aufweist. Diese Stege oder Rippen haben einen Winkelabstand von jeweils 90 Grad.

Es können bei allen Ausführungsformen aber auch andere Werkzeuge und entsprechende Werkzeugschnittstellen 125 zum Einsatz kommen, die eine rutschfreie Übertragung von Drehmomentkräften auf die Welle 122 des Exzentermechanismus 120 ermöglichen.

Vorzugsweise ist der Adapter 100 oder das Werkzeug 50 bei allen Ausführungsformen so ausgebildet, dass es zwei seitliche Schenkel 106.r, 106.l umfasst und der Aufnahmebereich 101 zwischen diesen Schenkeln 106.r, 106.l angeordnet ist. Diese beiden Schenkel 106.r, 106.l definieren die seitlichen Anschlagflächen 102.r und 102.l.

Ausserdem können die beiden Schenkel 106.r, 106.l zur Lagerung des Exzentermechanismus 120 dienen, wie in den Figuren 2 - 4 und in den Figuren 5 - 8B dargestellt.

Der Adapter 100 oder das Werkzeug 50 kann bei allen Ausführungsformen so ausgebildet sein, dass er im hinteren Bereich des Aufnahmebereichs 101 eine Erweiterung 109 aufweist. Diese Erweiterung ist an beiden Ausführungsformen vorgesehen und kann vor allem in den Figuren 2 sowie 5 und 6 gut erkannt werden. Diese Erweiterung 109, falls vorhanden, ist so ausgelegt, dass die empfindliche Schneidkante(n) derjenigen Seite einer Wendeschneidplatte 10, die im Moment nicht im Einsatz ist, vor zu grosser mechanische Belastung und Zerstörung geschützt sind.

Bei denjenigen Ausführungsformen, die mit einer solchen Erweiterung 109 versehen sind, hat die Wendeschneidplatte 10 nach dem Einsetzen in den Aufnahmebereich 101 einerseits Flächenkontakt mit der Auflagefläche 105 und andererseits Linien- oder Flächenkontakt entlang eines Teils der Anschlagflächen 102.r, 102.l. In Fig. 9A ist eine stark schematisierte Skizze gezeigt, um diesen Aspekt zu illustrieren. Man erkennt in der Draufsicht eine Schneidplatte 10, die im Aufnahmebereich 101 eingesetzt ist. Unterhalb der Schneidplatte 10 sitzt die Auflagefläche 105. In Fig. 9A ist der Umriss dieser Auflagefläche 105 unterhalb der Schneidplatte 10 durch strichlierte Linien dargestellt. Die beiden seitlichen Anschlagflächen 102.r und 102.l sind durch zwei Linien dargestellt, die in die Erweiterung 109 münden.

In Fig. 9B ist in schematischer Form die Überlappung Ü1 (kreuzschraffiert dargestellt) gezeigt. Diese Überlappung Ü1 entspricht der Auflagefläche, die sich zwischen der Unterseite der Schneidplatte 10 und der Auflagefläche 105 ergibt. Hier gilt die folgende Definition. Wenn die komplette Unterseite der Schneidplatte 10 durch die Auflagefläche 105 unterstützt wird, dann beträgt Ü1 = 100%. Wenn nur ein Teil der Unterseite der Schneidplatte 10 durch die Auflagefläche 105 unterstützt wird, dann gilt Ü1 < 100%. Im gezeigten Beispiel liegt Ü1 im folgenden Bereich: 90% < Ü1 < 99%. Eine Überlappung Ü1 von mehr als 80% ist besonders bevorzugt.

Der Linien- oder Flächenkontakt entlang der Anschlagflächen 102.r, 102.l ist in Fig. 9B durch zwei gepunktete Linien dargestellt.

Aus dem Zusammenwirken der Überlappung Ü1, der seitlichen Anschlagflächen 102.r, 102.l und der Klemmwirkung, die von oben her durch den Exzentermechanismus 120 auf die Schneidplatte 10 ausgeübt wird, ergibt sich ein fester Sitz der Schneidplatte 10 im Aufnahmebereich 101 des Adapters 100 oder des Werkzeugs 50.

Vorzugsweise umfasst der Adapter 100 oder das Werkzeug 50 bei allen Ausführungsformen auf zwei gegenüber liegenden Seiten des Aufnahmebereichs 101 je eine Durchgangsbohrung 103.l, 103.r. In Fig. 5 kann man die linke Durchgangsbohrung 103.l auf der Innenseite des linken Schenkels 106.l gut erkennen. Die rechte Durchgangsbohrung 103.r wird durch die Werkzeugschnittstelle 125 verdeckt. In der Draufsicht in Fig. 6 kann man beide Durchgangsbohrungen 103.l, 103.r andeutungsweise erkennen. In Fig. 8A ist die linke Durchgangsbohrung 103.l auf der Innenseite des linken Schenkels 106.l besonders gut sichtbar.

Vorzugsweise sitzt eine Welle 122 des Exzentermechanismus 120 bei allen Ausführungsformen in den beiden Durchgangsbohrungen 103.l, 103.r. Zu diesem Zweck sind die Durchgangsbohrungen 103.l, 103.r koaxial zueinander angeordnet.

Vorzugsweise ist der Exzentermechanismus 120 bei allen Ausführungsformen selbsthemmend ausgelegt. Das wird erreicht, indem der Winkel zwischen der Verbindungslinie von der Drehachse R1 der Exzenterwelle 122 zu dem Kontaktpunkt des Exzenterkörpers 123 mit der Schneidplattenoberfläche 10.o der Schneidplatte 10 und dem Lot auf die Schneidplattenoberfläche 10.o klein gehalten wird.

Vorzugsweise ist bei allen Ausführungsformen an der Welle 122 ein Exzenterkörper 123 mit einem äusseren Kontaktbereich 121 so vorgesehen oder ausgebildet, dass durch das Ausführen der Drehbewegung D1 um die Drehachse R1 der Welle 122 der lichte Abstand A1 zwischen der Auflagefläche 105 und dem Kontaktbereich 121 reduziert wird. In Fig. 4 und in Fig. 8B sind diese Details gut zu erkennen.

In Fig. 8B ist eine beispielhafte Querschnittfläche (Stirnfläche) eines spiralförmigen Exzenterkörpers 123 gezeigt. Die gezeigte Fläche stellt die Querschnittfläche (Stirnfläche) des Exzenterkörpers 123 der Fig. 8A dar. Der Durchtrittspunkt der Drehachse R1 und ein Hilfskreis HK, der konzentrisch zur Drehachse R1 liegt, sind in Fig. 8B gezeigt. Anhand der Gegenüberstellung des Hilfskreises HK und des Kontaktbereichs 121 des Exzenterkörpers 123 kann man erkennen, dass sich, ausgehend von einer optionalen Abflachung 126, eine Steigung ergibt, die im vorliegenden Beispiel mit dem Uhrzeigersinn zunimmt. Wenn man nun den Exzenterkörper 123 (z.B. mittels eines Werkzeugs) im Gegenuhrzeigersinn um die Drehachse R1 dreht, so wird der lichte Abstand A1 immer kleiner.

Der Adapter 100 kann bei allen Ausführungsformen eine Exzenterabdeckung umfassen, die oberhalb einer Schneidplatte 10 zwischen den Schenkeln 106.r, 106.l angeordnet ist. Eine solche Exzenterabdeckung, falls vorhanden, deckt mindestens eine Teil des Exzentermechanismus 120 ab oder umgreift diesen teilweise. Die Exzenterabdeckung kann zum Beispiel dazu dienen den Aufnahmebereich 101 nach oben hin abzudecken, um ein Eindringen und Festsetzen von Spänen zu verhindern.

Der Adapter 100 oder das Werkzeug 50 kann bei allen Ausführungsformen im Aufnahmebereich 101 ein Exzentergehäuse umfassen, das den Exzentermechanismus 120 trägt. Ein solches Exzentergehäuse ist oberhalb der Schneidplatte 10 angeordnet, nachdem diese in den Aufnahmebereich 101 eingesetzt wurde. Das Exzentergehäuse kann zum Beispiel dazu dienen den Aufnahmebereich 101 nach oben hin abzudecken, um ein Eindringen und Festsetzen von Spänen zu verhindern.

Fig. 10 zeigt eine Perspektivansicht einer Ausführungsform eines Werkzeugs 50, das mit zwanzig paarweise angeordneten Adaptern 100 der Erfindung bestückt ist, wobei jeder dieser Adapter 100 eine Wendeschneidplatte 10 trägt. Das Werkzeug 50 umfasst bei der beispielhaft gezeigten Ausführungsform einen zweiteiligen Grundkörper mit den Komponenten 51.1, 51.2. Es ist eine Zentralbohrung 52 vorgesehen, um das Werkzeug 50 in bekannter Art und Weise an einer Spindel (nicht gezeigt) befestigen zu können. Die erste Komponente 51.2 des Grundkörpers hat in der Draufsicht eine Sternform mit fünf radial nach aussen ragenden Bereichen 56. Zwischen den fünf radial nach aussen ragenden Bereichen 56 befinden sich fünf Zwischenräume 57. Die zweite Komponente 51.1 des Grundkörpers hat in der Draufsicht eine komplementäre Form, die sich von unten her in die erste Komponente 51.1 einsetzen lässt, wobei in jedem der erwähnten Zwischenräume 57 ein entsprechender Abschnitt 58 der zweiten Komponente 51.1 sitzt. Diese Abschnitte 58 haben hier eine Trapezform. Alles in allem hat das Werkzeug 50 in der gezeigten Ausführungsform den Aufbau eines bekannten Zyklo-Palloid®-Messerkopfs.

An der ersten Komponente 51.1 des Grundkörpers sind in der gezeigten Ausführungsform fünf Ausnehmungen 53.a (je eine pro Abschnitt 58) vorgesehen. An der zweiten Komponente 51.2 des Grundkörpers sind in der gezeigten Ausführungsform fünf Ausnehmungen 53.b (je eine pro Bereich 56) vorgesehen. Die Ausnehmungen 53.a, 53.b sind hier je zur Aufnahme von zwei Adaptern 100 ausgebildet.

Vorzugsweise umfasst das Werkzeug 50 bei allen Ausführungsformen im Bereich jeder der Ausnehmungen 53.a und 53.b einen Bereich zum Einsetzen von Platten 54.a und 54.b. Jede dieser Platten 54.a, 54.b hat eine Durchgangsbohrung. Es kommt vorzugsweise pro Ausnehmung 53.a, 53.b eine Gewindestange 55 oder eine Schraube zum Einsatz, die radial zum Werkzeug 50 verläuft. Die Platten 54.a, 54.b werden z.B. auf die entsprechende Gewindestange 55 geschoben und es wird eine Mutter 59 aufgeschraubt, um die entsprechende Platte 54.a oder 54.b gegen die paarweise in der Ausnehmung 53.a oder 53.b sitzenden Adapter 100 zu pressen.

Statt Gewindestangen 55 mit Muttern 59 können auch Schrauben verwendet werden, die in radiale Schraubenlöcher des Werkzeugs 50 eingeschraubt werden, um die Platten 54.a, 54.b gegen die paarweise in der Ausnehmung 53.a, 53.b sitzenden Adapter 100 zu pressen.

Bei der gezeigten Ausführungsform, die auf dem Zyklo-Palloid®-Messerkopf basiert, sind pro Messergruppe vier Adapter 100 mit je einer Wendeschneidplatte 10 vorgesehen.

Die Ausführungsform der Fig. 10 ist als Beispiel zu verstehen. Die Adapter 10 der Erfindung können auch anderes ausgeführt sein und an anderen Werkzeugen 50 befestigt werden. Wie bereits erwähnt, können die wesentlichen Elemente 101, 102.l, 102.r, 105, 120 der Adapter 100 auch ein integraler Bestandteil eines Vollwerkzeugs 50 sein.

Die Erfindung stellt ein neues Werkzeugsystem zur Verfügung, das je nach Ausgestaltung der Werkzeugs 50 und der Schneidplatten 10 zum Weich- oder Hartbearbeiten von Zahnrädern eingesetzt werden kann. Die Kosten je Werkstück gegenüber vergleichbaren Lösungen konnte durch die Erfindung deutlich reduziert werden.

**Bezugszeichen**

| | |
|---|---|
| Kopfbereiche | 4.1, 4.2 |
| Schneidplatte | 10 |
| Grundflächen | 10.o, 10.u |
| | |
| (Verzahnungs-)Werkzeug | 50 |
| Grundkörper | 51.1, 51.2 |
| Zentralbohrung | 52 |
| Ausnehmungen | 53 |
| Platte | 54 |
| Gewindestange | 55 |
| Bereiche | 56 |
| Zwischenräume | 57 |
| Abschnitt | 58 |
| Mutter | 59 |
| | |
| Adapter | 100 |
| Aufnahmebereich | 101 |
| Anschlagfläche | 102.l, 102.r |
| Durchgangsbohrung | 103.l, 103.r |
| Adapterkörper | 104 |
| Auflagefläche | 105 |
| Schenkel | 106.r, 106.l |
| Erweiterung | 109 |
| Oberfläche | 110 |
| Ausnehmung | 111 |
| | |
| Exzentermechanismus | 120 |
| Kontaktbereich | 121 |
| Welle | 122 |
| Exzenterkörper | 123 |
| | |
| Körper | 124 |
| Werkzeugschnittstelle | 125 |
| Abflachung | 126 |
| | |
| Lichter Abstand | A1 |
| Drehbewegung | D1 |
| Ebene | E1 |
| Hilfskreis | HK |
| Drehachse | R1 |
| Winkel | W |
| Winkel | W1, W2 |
| Überlappung | Ü1 |

## Patentansprüche

1. Verzahnungswerkzeug (50) zur spanabhebenden Bearbeitung eines Werkstücks, wobei das Werkzeug (50) umfasst:
- einen Aufnahmebereich (101) zum Einsetzen einer Schneidplatte (10),
- eine Auflagefläche (105) im Aufnahmebereich (101), auf der die Schneidplatte (10) aufliegt, nachdem sie in den Aufnahmebereich (101) eingesetzt wurde,
- mindestens zwei seitliche Anschlagflächen (102.l, 102.r) im Aufnahmebereich (101), an denen die Schneidplatte (10) anliegt, nachdem sie in den Aufnahmebereich (101) eingesetzt wurde,
- einen Exzentermechanismus (120), der so ausgebildet und oberhalb der Auflagefläche (105) angeordnet ist, dass durch das Ausführen einer Drehbewegung (D1) ein lichter Abstand (A1) zwischen der Auflagefläche (105) und einem Kontaktbereich (121) des Exzentermechanismus (120) reduziert wird, um die Schneidplatte (10) zwischen der Auflagefläche (105) und der Kontaktseite (121) des Exzentermechanismus (120) festklemmen zu können.

2. Verzahnungswerkzeug (50) nach Anspruch 1, **dadurch gekennzeichnet, dass** es mindestens eine Schneidplatte (10) umfasst, die die Grundform einer Raute- oder eines Parallelogramms hat und **dadurch gekennzeichnet, dass** es sich bei der Schneidplatte (10) vorzugsweise um eine Wendeschneidplatte (10) handelt, die durch ein Lösen des Exzentermechanismus (120) aus dem Aufnahmebereich (101) entnommen, umgedreht und durch das Ausführen der Drehbewegung (D1) in dem selben Aufnahmebereich (101) oder in einem anderen Aufnahmebereich (101) festgeklemmt werden kann.

3. Verzahnungswerkzeug (50) nach Anspruch 1 oder 2, **dadurch gekennzeichnet, dass** der Exzentermechanismus (120) selbsthemmend ausgelegt ist.

4. Verzahnungswerkzeug (50) nach Anspruch 1, 2 oder 3, **dadurch gekennzeichnet, dass** im Aufnahmebereich (101) auf zwei gegenüber liegenden Seiten je eine Durchgangsbohrung (103.l, 103.r) vorgesehen ist, wobei diese beiden Durchgangsbohrungen (103.l, 103.r) koaxial zueinander liegen und der Exzentermechanismus (120) eine Welle (122) umfasst, die in den beiden Durchgangsbohrungen (103.l, 103.r) drehbar gelagert ist.

5. Verzahnungswerkzeug (50) nach Anspruch 4, **dadurch gekennzeichnet, dass** an der Welle (122) ein Exzenterkörper (123) mit dem Kontaktbereich (121) so vorgesehen oder ausgebildet ist, dass durch das Ausführen der Drehbewegung (D1) um die Drehachse (R1) der Welle (122) der lichte Abstand zwischen der Auflagefläche (105) und dem Kontaktbereich (121) reduziert wird.

6. Verzahnungswerkzeug (50) nach einem der Ansprüche 1 bis 5, **dadurch gekennzeichnet, dass** es zwei seitliche Schenkel (106.r, 106.l) umfasst und der Aufnahmebereich (101) zwischen diesen Schenkeln (106.r, 106.l) angeordnet ist.

7. Verzahnungswerkzeug (50) nach Anspruch 6, **dadurch gekennzeichnet, dass** es eine Exzenterabdeckung (107) umfasst, die oberhalb einer Schneidplatte (10) zwischen den Schenkeln (106.r, 106.l) angeordnet ist, wobei die Exzenterabdeckung (107) mindestens eine Teil des Exzentermechanismus (120) umgreift.

8. Verzahnungswerkzeug (50) nach einem der Ansprüche 1 bis 5, **dadurch gekennzeichnet, dass** es ein Exzentergehäuse umfasst, das den Exzentermechanismus (120) trägt, wobei das Exzentergehäuse oberhalb einer Schneidplatte (10) angeordnet ist.

9. Verzahnungswerkzeug (50) nach einem der Ansprüche 1 bis 7, **dadurch gekennzeichnet, dass** das Verzahnungswerkzeug (50) pro Schneidplatte (10) einen Adapter (100) umfasst, der mit dem Verzahnungswerkzeug (50) verbunden oder verbindbar ist, und **dadurch gekennzeichnet, dass** der Aufnahmebereich (101) samt Auflagefläche (105), seitlichen Anschlagflächen (102.l, 102.r) und Exzentermechanismus (120) an dem Adapter (100) ausgebildet sind.

10. Verzahnungswerkzeug (50) nach einem der Ansprüche 1 bis 7, **dadurch**
**gekennzeichnet, dass** der Aufnahmebereich (101) samt Auflagefläche (105), seitlichen Anschlagflächen (102.l, 102.r) und Exzentermechanismus (120) unmittelbar an dem Werkzeug (50) ausgebildet sind.

11. Verzahnungswerkzeug (50) nach einem der Ansprüche 1 - 10, **dadurch**
**gekennzeichnet, dass** es sich bei der Schneidplatte (10) um eine einstückige Schneidplatte (10) handelt.

12. Verzahnungswerkzeug (50) nach Anspruch 11, **dadurch gekennzeichnet,**
**dass** es sich bei der Schneidplatte (10) um eine loch- oder ausnehmungsfreie Schneidplatte (10) handelt.

13. Adapter (100) zur spanabhebenden Verzahnungsbearbeitung eines
Werkstücks, wobei der Adapter (100) einen Adapterkörper (104) umfasst mit
- einem Aufnahmebereich (101) zum Einsetzen einer Schneidplatte (10),
- einer Auflagefläche (105) im Aufnahmebereich (101), auf der die Schneidplatte (10) aufliegt, nachdem sie in den Aufnahmebereich (101) eingesetzt wurde, und
- mit mindestens zwei seitlichen Anschlagflächen (102.l, 102.r) im Aufnahmebereich (101), an denen die Schneidplatte (10) anliegt, nachdem sie in den Aufnahmebereich (101) eingesetzt wurde,
und wobei der Adapter (100) einen Exzentermechanismus (120) umfasst, der so ausgebildet und oberhalb der Auflagefläche (105) angeordnet ist, dass durch das Ausführen einer Drehbewegung (D1) ein lichter Abstand (A1) zwischen der Auflagefläche (105) und einem Kontaktbereich (121) des Exzentermechanismus (120) reduziert wird, um die Schneidplatte (10) zwischen der Auflagefläche (105) und der Kontaktseite (121) des Exzentermechanismus (120) festklemmen zu können.

14. Adapter (100) nach Anspruch 13, **dadurch gekennzeichnet, dass** der
Exzentermechanismus (120) selbsthemmend ausgelegt ist.

15. Adapter (100) nach Anspruch 13 oder 14, **dadurch gekennzeichnet, dass**
im Aufnahmebereich (101) auf zwei gegenüber liegenden Seiten je eine Durchgangsbohrung (103.l, 103.r) vorgesehen ist, wobei diese beiden Durchgangsbohrungen (103.l, 103.r) koaxial zueinander liegen und der Exzentermechanismus (120) eine Welle (122) umfasst, die in den beiden Durchgangsbohrungen (103.l, 103.r) drehbar gelagert ist.

16. Adapter (100) nach Anspruch 15, **dadurch gekennzeichnet, dass** an der
Welle (122) ein Exzenterkörper (123) mit dem Kontaktbereich (121) so vorgesehen oder ausgebildet ist, dass durch das Ausführen der Drehbewegung (D1) um die Drehachse (R1) der Welle (122) der lichte Abstand zwischen der Auflagefläche (105) und dem Kontaktbereich (121) reduziert wird.

17. Verwendung eines Verzahnungswerkzeugs (100) nach einem der
Ansprüche 1 bis 12 beim Weich- oder Hartverzahnen eines Werkstücks.
